# EUROPÄISCHE PATENTSCHRIFT

(11) **EP 1 123 485 B1**
(45) Veröffentlichungstag und Bekanntmachung des Hinweises auf die Patenterteilung: **27.12.2006**
(21) Anmeldenummer: 99955832.3
(22) Anmeldetag: 01.10.1999
(51) Int. Cl.: G01C 19/56, G01P 21/00, G01P 15/00, G01C 25/00

(54) **SENSOR MIT RESONANZSTRUKTUR, INSBESONDERE BESCHLEUNIGUNGS- ODER DREHRATENSENSOR, SOWIE VORRICHTUNG UND VERFAHREN ZUM SELBSTTEST**
SENSOR HAVING A RESONANCE STRUCTURE, ESPECIALLY AN ACCELERATION OR ROTATION RATE SENSOR, AND A DEVICE FOR CARRYING OUT A SELF-TEST
CAPTEUR A STRUCTURE DE RESONANCE, EN PARTICULIER CAPTEUR D'ACCELERATION OU DE VITESSE DE ROTATION, ET DISPOSITIF ET PROCEDE D'AUTOCONTROLE

(30) Priorität: 01.10.1998 DE 19845185
(43) Veröffentlichungstag der Anmeldung: 16.08.2001
(73) Patentinhaber: Airbus Deutschland GmbH, 21129 Hamburg (DE)
(72) Erfinder: SCHALK, Josef, D-84051 Altheim (DE); STENZEL, Erwin, D-82041 Deisenhofen (DE); BAUER, Karin, D-82041 Oberhaching (DE); FREITAG, Rainer, D-73277 Owen (DE); HILSER, Roland, D-73230 Kirchheim (DE); VOSS, Ralf, D-82541 Münsing (DE); AIKELE, Matthias, D-81673 München (DE); SEIDEL, Helmut, D-82319 Starnberg (DE); PRECHTEL, Ulrich, D-81735 München (DE)
(86) Internationale Anmeldenummer: PCT/DE1999/003163
(87) Internationale Veröffentlichungsnummer: WO 2000/020826

(56) Entgegenhaltungen:
- EP-A- 0 525 549
- EP-A- 0 638 782

## Beschreibung

Die vorliegende Erfindung betrifft einen Sensor gemäß dem Oberbegriff des Patentanspruchs 1, sowie eine Vorrichtung und ein Verfahren zum Selbsttest eines Sensors gemäß den Oberbegriffen der Ansprüche 10 und 15. Weiterhin betrifft die Erfindung einen Beschleunigungssensor gemäß dem Oberbegriff des Patentanspruchs 22.

Allgemein werden Sensoren in Systemen zur Erfassung von Meßgrößen eingesetzt. Auf dem Gebiet der Inertialsensorik werden beispielsweise Drehraten- und Beschleunigungssensoren zur Erfassung von Bewegungsgrößen verwendet. Da es sich zumeist um sicherheitsrelevante Anwendungen handelt, müssen die Sensoren äußerst zuverlässig sein und Meßgrößen sicher erfassen.

In der DE 195 28 961 ist ein Drehratensensor nach dem Stimmgabelprinzip beschrieben, der aus Silizium gefertigt ist. Im Betrieb werden die Stimmgabeln zu Schwingungen angeregt und ein Sensorelement registriert eine Torsion der Stimmgabelaufhängung, die bei einer Drehung des Sensors um eine zur Stimmgabelaufhängung parallele Achse auftritt.

Um z. B. Störungen des Sensors oder eine Drift zu erkennen ist es notwendig, daß der Sensor während des Betriebs Tests unterzogen wird. Dadurch wird die Sicherheit und Genauigkeit der erfaßten Meßgröße erhöht.

In der EP 0708 925 ist eine Vorrichtung zur Fehlererkennung in einem Aufprallsensorsystem beschrieben, bei der durch Betätigen eines Sensorelements eine Testreaktion erzeugt wird und das Ergebnis mit dem Ergebnis einer zu erwartenden Reaktion verglichen wird. In der US 5, 060, 504 ist ein Verfahren zur Selbstkalibrierung eines Beschleunigungssensors gezeigt, bei dem eine Sensormasse relativ zu einem Rahmen verschoben wird, wobei die Verschiebung einer bekannten Beschleunigung entspricht. Dabei wird der Ausgangswert als Referenzwert für eine nachfolgende Kalibrierung benutzt. Auch bei dem selbsttestfähigen Beschleunigungssensor, der in der US 5, 103, 667 beschrieben ist, wird zum Testen oder Kalibrieren des Sensors eine Masse definiert bewegt und die Bewegung gemessen.

Die bekannten Systeme haben jedoch den Nachteil, daß der eigentliche Meßvorgang während des Sensortests unterbrochen werden muß. Es wird zeitlich alternierend gemessen und getestet, weshalb das Meßsignal nicht zeitkontinuierlich vorliegt. Weiterhin wird nur eine bestimmte, vordefinierte Meßgröße zum Vergleich erzeugt, d. h. es erfolgt kein Test über den gesamten Meßbereich des Sensors.

Beschleunigungssensoren werden z.B. in Kraftfahrzeugen für die Fahrwerksregelung sowie für Navigations-, Fahrdynamik- und passive Sicherheitssysteme (Airbaganwendung) eingesetzt. Die ständig steigende Anzahl von Sensoren macht prinzipiell eine höchst mögliche Zuverlässigkeit wünschenswert. In Zukunft werden immer mehr Systeme aktiv in das Fahrgeschehen eingreifen und starre mechanische Koppelungen werden durch elektronische Signale ersetzt (drive-by-wire). Hier ist eine Selbsttestfähigkeit oder eine geeignete Signalkontrolle unbedingt erforderlich. Weiterhin finden Beschleunigungssensoren auch in Navigationssystemen der zivilen und militärischen Luftfahrt Anwendung.

Insbesondere in Kraftfahrzeugen werden oftmals kapazitive Beschleunigungssensoren verwendet, wie sie z.B. von C. Lemaire und B. Sulouff in dem Artikel Surface Micromachined Sensors for Vehicle Navigation Systems in Advanced Microsystems for Automotive Applications (D. E. Ricken and W. Gessner, edts., Springer, Berlin 1998, S. 103-112) beschrieben sind. Diese Systeme können die Elektroden der kapazitiven Auslesung auch zur Auslenkung der Masse benutzen. Dies ist in diskreten Zeitabständen möglich, jedoch nicht zeitkontinuierlich.

In dem US Patent 5,834,646 wird ein resonanter Beschleunigungssensor vorgestellt, der im wesentlichen aus einer mehrfach eingespannten Platte besteht. Diese Platte dient sowohl als Resonator, dessen Resonanzfrequenz durch eine äußere Beschleunigung verstimmt wird, als auch als seismische Masse. Durch diese Anordnung kann die Integrität des Masse-Feder-Systems überprüft werden, jedoch nicht die Einwirkung einer Beschleunigung simuliert werden.

Ein weiterer resonanter Beschleunigungssensor ist in der Druckschrift DE 198 12 773 A1 beschrieben. Er hat eine Resonatorstruktur, die durch erste elektrische Signale in Schwingungen angeregt wird und in Abhängigkeit von der Messgröße zweite elektrische Signale abgibt.

Ein permanenter Selbsttest ist auch für die o.g. kapazitiven Sensoren bisher nicht möglich. Denkbar wären allenfalls Zusatzstrukturen, wie z.B. zusätzliche Kondensatorkämme zur Anregung, die jedoch einen erhöhten Platzbedarf erfordern und auch einen erhöhten Preis zur Folge haben. Die bekannten kapazitiven Sensoren können deshalb höchstens in diskreten Zeitabständen einen statischen Selbsttest durchführen

Erforderlich wäre also ein Sensor, insbesondere ein Drehraten- oder Beschleunigungssensor, mit genauer resonanter Signalauswertung, wobei ein permanenter bzw. on-going Selbsttest durchgeführt werden kann.

EP 0 638 782 A1 offenbart einen Drehratensensor mit einer Selbsttesteinrichtung. Dabei koppeln zu Schwingungen angeregte Antriebszinken einer Stimmgabel diese Schwingungen bei einer Drehung des Sensors auf Detektionszinken über. Das dort über Abnehmerelektroden abgegriffene Signal ist proportional zur Drehrate. Um einen Test durchzuführen, wird den Abnehmerelektroden ein sinusförmiges Testsignal als Pseudomesssignal zugeführt. Ändert sich daraufhin das Abnehmersignal nicht, liegt ein Fehler vor. Bei diesem Sensor erfolgt jedoch kein Test der gesamten Sensorstruktur, sondern es werden nur die Ausgangssignale getestet.

EP 0 525 549 beschreibt einen Beschleunigungssensor mit SelbsttestEinrichtung. Bei dieser Art von Sensoren erfolgt jedoch bei der Messung keine Anregung der Sensorstruktur zu einer Anregungsschwingung. Der Sensor besitzt eine piezoelektrische Struktur mit drei Elektroden, wobei eine erste

Elektrode für den Selbsttest des Sensors vorgesehen ist, eine zweite Elektrode zur Abnahme des Beschleunigungssignals dient, und eine dritte Elektrode den Masseanschluss bildet. Ein Oszillatorschaltkreis erzeugt ein Vllechselstrom-Testsignal mit bestimmter Frequenz, welches über die erste Elektrode dem Sensor zugeführt wird. Das Testsignal wird dem Messsignal überlagert. Aus dem summierten Signal wird das Testsignal anschließend wieder extrahiert und analysiert.

Es ist daher Aufgabe der vorliegenden Erfindung, einen Sensor zu schaffen und eine Vorrichtung und ein Verfahren zum Selbsttest eines Sensors anzugeben, bei dem die gesamte Sensorstruktur getestet wird, wobei während des Tests keine Unterbrechung der Messung bzw. Beeinträchtigung des Messsignals erfolgt und der Selbsttest zeitkontinuierlich während des Messbetriebs durchgeführt werden kann.

Diese Aufgabe wird gelöst durch den Sensor gemäß Patentanspruch 1, den Sensor mit einer Vorrichtung zum Selbsttest des Sensors gemäß Patentanspruch 10, und das Verfahren zum Selbsttest eines Sensors gemäß Patentanspruch 15.

Weitere vorteifhafte Merkmale, Aspekte und Details der Erfindung ergeben sich aus den abhängigen Ansprüchen, der Beschreibung und den Zeichnungen.

Der erfindungsgemäße Sensor umfasst eine schwingfähige Struktur zur Erfassung einer Messgröße durch eine erste periodische Schwingung der Struktur, ein Element zur Erzeugung eines von der Messgröße abhängigen Ausgangssignals, sowie Mittel zur Erfassung und/oder Abtrennung eines Testsignalanteils vom Ausgangssignal, der durch eine der ersten Schwingung überlagerte zweite periodische Schwingung der Struktur erzeugt wird, und weiterhin eine Aktoreinheit zur Anregung der Struktur zu der ersten periodischen Schwingung sowie Mittel zur Anregung der Struktur in einer zweiten Schwingungsmode, die sich der ersten Schwingungsmode, die der Erfassung der Messgröße dient, überlagert.

Der Sensor ist selbsttestfähig und in der Lage, ein zeitkontinuierliches Messsignal und gleichzeitig ein Testsignal, das Auskunft über die Funktionsfähigkeit des Sensors gibt, zu liefern. Es erfolgt keine Unterbrechung der Messung bzw. Beeinträchtigung des Messsignals.

Dabei umfasst der Sensor bevorzugt Aktorelemente zur Erzeugung der zweiten periodischen Schwingung der Struktur, wobei die erste und die zweite periodische Schwingung z.B. durch dieselben Aktorelemente erzeugbar ist. Die zweite Schwingung kann aber auch durch mechanisches Übersprechen erzeugt werden. Im Betrieb werden die Schwingungen der Struktur erfasst, um das Ausgangssignal zu erzeugen.

Gemäß einem weiteren Aspekt der Erfindung wird ein Sensor mit einer Vorrichtung zum Selbsttest des Sensors geschaffen, wobei der Sensor eine Messgröße über eine schwingfähige Struktur erfasst und in Abhängigkeit von der Messgröße ein periodisches Ausgangssignal erzeugt, mit Mitteln zur Abtrennung eines Testsignalanteils, der einem Nutzsignalanteil überlagert ist, aus dem periodischen Ausgangssignal des Sensors, mit Vergleichsmitteln zum Vergleichen des Testsignalanteils mit einem vordefinierten Wert oder mit einem dem Sensor zugeführten Testsignal, und weiterhin mit einer Aktoreinheit zur Anregung der Struktur zu der ersten periodischen Schwingung und Mitteln zur Anregung der Struktur in einer zweiten Schwingungsmode, die sich der ersten Schwingungsmode, die der Erfassung der Messgröße dient, überlagert. Mit der Vorrichtung kann ein Sensor-Selbsttest durchgeführt werden, der zeitkontinuierlich ist und im vollen Meß- und Dynamikbereich des Sensors erfolgen kann, ohne die eigentliche Meßaufgabe zu beeinflussen.

Vorteilhafterweise umfaßt der Sensor bzw. die Vorrichtung eine Einrichtung zum Aufmodulieren eines Testsignals auf ein Signal zur Anregung der schwingfähigen Struktur. Dadurch kann der Selbsttest über den gesamten Meßbereich des Sensors abgestimmt werden.

Der Sensor kann eine mechanische Unwucht bzw. ein Übersprechen aufweisen, das den Testsignalanteil verursacht, der zum Test des Sensors genutzt wird. Dadurch können Bauelemente eingespart werden und es ergibt sich eine kostengünstige Herstellung. Vorteilhafterweise hat der Sensor ein Aktorelement zur Erzeugung der zweiten Schwingung, die den Testsignalanteil verursacht, und die Vorrichtung hat bevorzugt Mittel zur Anregung der Struktur in einer zweiten Schwingungsmode, die sich einer ersten Schwingungsmode, die der Erfassung der Meßgröße dient, überlagert. Dadurch können definierte Testsignale aufmoduliert werden und das Sensorausgangssignal kann nach Meßgröße und Antwort des Systems auf das Testsignal ausgewertet werden.

Bevorzugt wird das Ausgangssignal durch eine Einrichtung zur Frequenz- und/oder Phasenanalyse analysiert. Durch Mittel zum periodischen Verändern der Amplitude und/oder Frequenz des Testsignals kann ein Test über den gesamten Meß- und/oder Dynamikbereich des Sensors erfolgen. Insbesondere kann der Sensor ein Drehraten-, Beschleunigungs- oder Drucksensor sein.

Der erfindungsgemäße Sensor hat z.B. als schwingfähige Struktur einen Resonator und eine daran gekoppelte schwingfähige Masse, die bei einer Auslenkung die Resonanzfrequenz des Resonators ändert. Zur Erzeugung des Testsignalanteils während der Messung ist die Masse in Schwingungen versetzbar.

Besonders bevorzugt dient der Testsignalanteil zur Kalibrierung des Sensors.

Vorteilhafterweise versetzt im Betrieb die Aktoreinheit z.B. einen-Resonator und eine daran gekoppelte Masse in Schwingungen unterschiedlicher Mode, wobei die schwingende Masse die Resonanzfrequenz des Resonators periodisch ändert, um den Testsignalanteil zu erzeugen.

Der Sensor umfasst z.B. Mittel zur Demodulation des Messsignals, wobei das Signal amplituden- oder frequenzmoduliert sein kann.

Das erfindungsgemäße Verfahren zum Selbsttest eines Sensors mit einer schwingfähigen Struktur umfasst die Schritte:
Überlagern einer ersten Schwingung der Struktur mit einer zweiten periodischen Schwingung; Erfassen eines Ausgangssignals, das Informationen über eine Messgröße enthält, die an die schwingende Struktur koppelt; und Überwachen eines im Ausgangssignal enthaltenen Testsignalanteils, der durch die zweite periodische Schwingung der Struktur erzeugt wird, wobei die schwingfähige Struktur durch Aktoreinheiten zu überlagerten Schwingungen in einer ersten und einer zweiten Schwingungsmode angeregt wird, um die Messgröße und den Testsignalanteil gleichzeitig zu erfassen.

Bevorzugt wird dabei ein Anregungssignal zur Erzeugung der ersten Schwingung der Struktur durch ein Testsignal amplitudenmoduliert, das während des Messbetriebs des Sensors in seiner Frequenz und/oder Amplitude variiert werden kann. Mit dem erfindungsgemäßen Verfahren kann die vollständige Funktion des Sensors inklusive Elektronik über den gesamten Dynamikbereich verifiziert werden. Durch das Verfahren wird eine hohe Eigensicherheit des Sensors erreicht, was insbesondere bei sicherheitsrelevanten Anwendungen von Bedeutung ist.

Auch eine Frequenzmodulation der Anregungssignale durch ein Testsignal ist möglich, um den Selbsttest während des Messbetriebes durchzuführen.

Insbesondere kann der Testsignalanteil im Ausgangssignal zur Kalibrierung des Sensors verwendet werden. Bevorzugt wird die Struktur zu Schwingungen mit mindestens zwei Frequenzen bzw. Moden angeregt, wobei die erste Frequenz bzw. Mode die zu messende Größe repräsentiert, während die zweite Frequenz bzw. Mode ein Testsignal repräsentiert.

Vorteilhaft ist der erfindungsgemäße Sensor als Beschleunigungssensor ausgestaltet und umfasst einen Resonator, der an eine Masse gekoppelt ist, so dass sich seine Resonanzfrequenz bei einer Auslenkung der Masse ändert, eine Aktoreinheit zur Anregung des Resonators, und einen Detektor zur Erzeugung eines Ausgangssignals, das von der Resonanzfrequenz abhängig ist, sowie eine Steuereinheit zur Erzeugung eines Anregungssignals, das mindestens zwei Frequenzen enthält, um den Resonator und die Masse gleichzeitig zu Schwingungen unterschiedlicher Moden anzuregen, und eine Auswertestufe, die derart angeordnet ist, dass sie die Schwingungsmode der Masse als Testsignal aus dem Ausgangssignal separiert.

Durch den erfindungsgemäßen Sensor können beim Selbsttest alle relevanten Komponenten der Auswerteelektronik mitgetestet werden. Auch kann eine Rekalibrierung in vorbestimmten Zeitintervallen erfolgen.

Die Erfindung wird nachfolgend beispielhaft anhand der Figuren beschrieben, in denen
- Figur 1: eine Ansicht eines mikromechanischen Drehratensensors als bevorzugte Ausführungsform der Erfindung zeigt;
- Figur 2: eine Schaltung zum Selbsttest durch Simulation einer Umwucht zeigt;
- Figur 3: eine Schaltung zum Selbsttest durch Simulation einer Drehrate zeigt;
- Figur 4: einen Beschleunigungssensor als weitere Ausführungsform der Erfindung zeigt;
- Figur 5: einen selbsttestfähigen resonanten Beschleunigungssensor als besonders bevorzugte Ausführungsform der Erfindung in prinzipieller Darstellung zeigt;
- Figur 6: eine Steuer- bzw. Auswerteschaltung zum Selbsttest des Beschleunigungssensors von Figur 5 zeigt; und
- Figur 7: eine Fourieranalyse des Ausgangssignals des Beschleunigungssensors von Figur 5 zeigt.

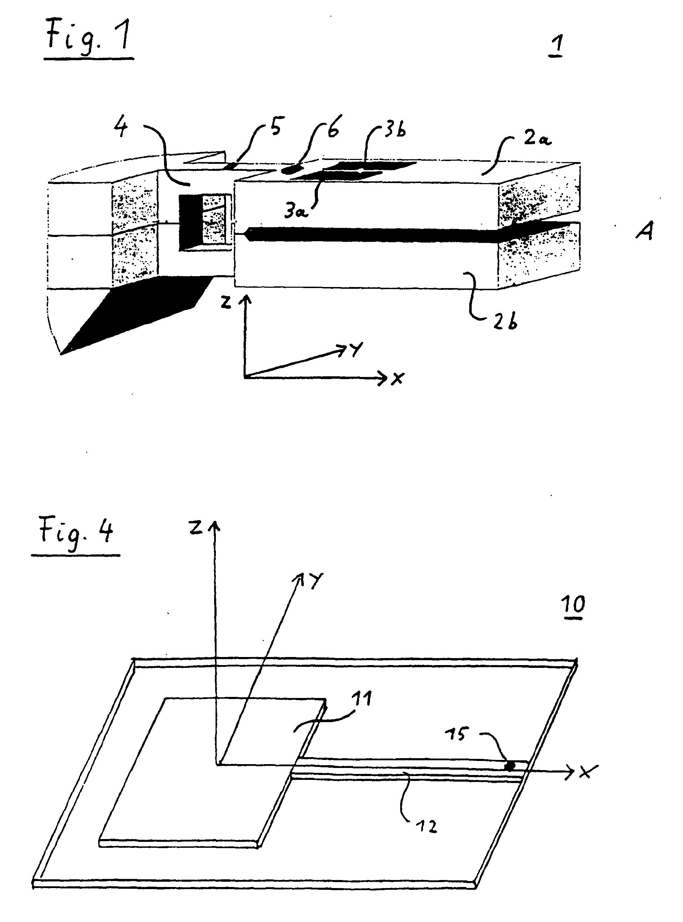

Der in Figur 1 gezeigte Sensor 1 ist ein Drehratensensor nach dem Stimmgabelprinzip, der aus Silizium gefertigt ist. Zwei parallel zueinander ausgerichtete Zinken 2a, 2b bilden eine schwingfähige Struktur bzw. Resonanzstruktur, die zur Erfassung einer Drehrate dient. Auf dem oberen Zinken 2a ist eine Doppelelektrode 3a, 3b angeordnet, die unter anderem zur Anregung der Zinken 2a, 2b zu einer periodischen Schwingung in Z-Richtung dient. Eine Stimmgabelaufhängung 4 ist als Torsionsbalken ausgebildet, an dem ein piezoresistives Element 5 befestigt ist. Das piezoresistive Element 5 dient zur Erzeugung eines Ausgangssignals, das bei einer Torsion der Stimmgabelaufhängung 4 erzeugt wird. Die Torsion wird aufgrund der Corioliskraft periodisch verursacht, wenn sich der Drehratensensor um die durch die Stimmgabelaufhängung verlaufende X-Achse dreht, während die Zinken 2a, 2b in Z-Richtung schwingen. Das piezoresistive Element 5 dient, zusammen mit einer nachgeschalteten Elektronikeinheit, auch zur Erfassung und Abtrennung eines Testsignalanteils vom Ausgangssignal, der durch eine weitere periodische Schwingung der Zinken erzeugt wird.

Die der ersten Schwingung überlagerte weitere periodische Schwingung kann z. b. dadurch zustande kommen, daß der Sensor 1 eine Unwucht hat, die z. B. durch eine Asymmetrie der schwingenden Massen verursacht ist. In diesem Fall weist der Sensor 1 ein mechanisches Übersprechen auf, dessen Signalanteil im Ausgangssignal dem eigentlichen Nutzsignal bzw. Drehratensignal überlagert ist und als Testsignalanteil genutzt wird.

Andererseits können die Zinken 2a, 2b auch durch die Doppelelektrode 3a, 3b zu einer weiteren Schwingung bzw. einer Torsionsschwingung angeregt werden, die sich der Anregungsschwingung in Z-Richtung überlagert und den Testsignalanteil im Ausgangssignal ergibt. In der Nähe des Torsionsbalkens 4 befindet sich auf dem oberen Zinken 2a ein weiteres piezoresistives Element 6, mit dem die Zinkenschwingung in Z-Richtung registriert bzw. die Amplitude dieser Schwingung überwacht wird.

Im Meßbetrieb schwingen die Zinken 2a, 2b gegenphasig in Z-Richtung. Bei einer Drehung des Systems um die X-Achse wird durch das piezoresistive Element 5 am Torsionsbalken eine Torsionsschwingung registriert, die um 90° phasenverschoben zur Zinkenamplitude ist. Aufgrund von Fertigungstoleranzen oder beabsichtigten Asymmetrien wird durch das piezoresistive Element 5 ein weiteres Meßsignal generiert, das von der Drehrate unabhängig ist und bei Sensoren mit genügendem Frequenzabstand zwischen der Eigenfrequenz der Torsion und der Eigenfrequenz der Anregung eine Phasenverschiebung von 90° gegenüber dem eigentlichen Meßsignal bzw. Drehratensignal aufweist. Dieser Signalanteil, der durch das mechanische Übersprechen generiert wird, wird in einer Ausführungsform der vorliegenden Erfindung als Testsignalanteil verwendet und zum Selbsttest des Sensors ausgewertet.

Aufgrund der Phasenverschiebung des Testsignalanteils, d. h. des Anteils am Ausgangssignal, der durch das mechanische Übersprechen erzeugt wird, kann der Testsignalanteil aus dem Ausgangssignal abgetrennt und ausgewertet bzw. überwacht werden. Bei einer Abweichung des Testsignalanteils von einem bestimmten Wert, der für den Sensor charakteristisch ist, erfolgt eine Fehlermeldung.

Ein derartiges mechanisches Übersprechen des Sensors 1 kann aber auch simuliert werden, ohne daß Asymmetrien im Sensor vorhanden sind. Dazu werden die beiden Elektroden 3a, 3b durch ein weiteres Signal gegenphasig angesteuert, so daß die Zinken 2a, 2b eine Torsionsschwingung um die X-Achse ausführen, die der Zinkenschwingung in Z-Richtung überlagert ist. Die Doppelelektrode 3a, 3b wird also mit einem zusätzlichen periodischen Signal angesteuert, das dem Anregungssignal zur Erzeugung der Zinkenschwingung in Z-Richtung überlagert ist, wobei beide Signale in Phase sind. Somit erfolgt die Anregung durch das zusätzliche Signal auf eine Weise, daß sein Anteil im Ausgangssignal des piezoresistiven Elements 5 um 90° zur Phase des bei einer Drehrate erzeugten Nutzsignals verschoben ist. Es wird also ein Testsignal auf das Signal zur Anregung der Zinkenschwingung in Z-Richtung aufmoduliert, das Ergebnis zum Anregungssignal addiert, und das Sensorausgangssignal wird hinsichtlich der Antwort des Systems auf das Testsignal und gleichzeitig hinsichtlich der Meßgröße ausgewertet.

Auch beim simulierten Übersprechen wird also ausgenutzt, daß der im Ausgangssignal enthaltene Testsignalanteil gegenüber dem im Ausgangssignal enthaltenen Nutzsignalanteil um 90° phasenverschoben ist. Dieses Selbsttestverfahren hat den Vorteil, daß es aufgrund der Phasenselektivität zur Drehrate im Frequenzbereich des Testsignals zu keinen Überlagerungen mit dem Meßsignal kommen kann. Durch Veränderung der Amplitude des Testsignals kann der Selbsttest im gesamten Meßbereich des Sensors durchgeführt werden, während der Sensor ein Meßsignal bzw. Drehratensignal liefert.

Mit dem in Figur 1 gezeigten Stimmgabel-Drehratensensor kann ein weiteres Selbsttestverfahren durchgeführt werden, bei dem durch das Testsignal eine Drehrate simuliert wird, d. h., die Anregungsschwingung wird mit einem Signal moduliert, das einer Drehrate entspricht. Die Modulation mit dem drehratenäquivalenten Signal kann erreicht werden, indem das Ausgangssignal der Amplitudenüberwachung der in Z-Richtung schwingenden Zinken 2a, 2b, das mit dem piezoresistiven Element 6 gemessen wird, mit dem periodischen Testsignal amplitudenmoduliert wird. Das amplitudenmodulierte Signal wird dann mit dem periodischen Ansteuersignal zur Erzeugung der Schwingung der Zinken 2a, 2b in Z-Richtung addiert. Beide Signale sind dabei um 90° zueinander phasenverschoben. Dies hat im Sensor 1 ein auf den Torsionsbalken 4 wirkendes Drehmoment zur Folge, welches einer Drehrate entspricht, die sich mit der Testfrequenz des Testsignals ändert. In diesem Fall ist der im Augangssignal des piezoresistiven Elements 5 enthaltene Testsignalanteil durch Bandpaßfilterung zu rekonstruieren. Wie bei der Simulation des mechanischen Übersprechens wird auch bei der Simulation einer Drehrate der im Ausgangssignal enthaltene Testsignalanteil mit dem Testsignal verglichen, das dem Sensor über die Doppelelektrode 3a, 3b zugeführt wird. Das Sensorausgangssignal wird hinsichtlich der Meßgröße, in diesem Fall die zu erfassende Drehrate, und gleichzeitig hinsichtlich der Antwort des Systems auf das Testsignal ausgewertet.

Durch Variation der Amplitude des aufmodulierten Testsignals und Vergleich mit dem rekonstruierten Testsignalanteil im Ausgangssignal ist ein vollständiger Selbsttest des Sensors möglich, der sich über seinen gesamten Meßbereich erstreckt. So ist beispielsweise bei einer kleinen Amplitude der mittels der Doppelelektrode 3a, 3b erzeugten Torsionsschwingung ein Test des Sensors im Meßbereich kleiner Drehraten möglich, während bei einer großen Amplitude der künstlich erzeugten Torsionsschwingung ein Selbsttest des Sensors im Meßbereich relativ hoher Drehraten erfolgt. Durch Modulation der Amplitude desjenigen Signals, das über die Doppele!ektrode 3a, 3b die Drehschwingung der Zinken 2a, 2b erzeugt, die sich der Anregungsschwingung der Zinken 2a, 2b in Z-Richtung überlagert, wird der Meßbereich des Sensors beim Selbsttest ständig durchschritten.

Durch Variation der Testfrequenz des aufmodulierten Testsignals wird zusätzlich auch der gesamte Dynamikbereich des Sensors beim Selbsttest durchschritten. Bei der Modulation mit einem drehratenäquivalenten Signal ist jedoch darauf zu achten, daß die Frequenz des aufmodulierten Testsignals, d. h. die Testfrequenz, außerhalb des Frequenzspektrums der zu messenden Drehrate liegt. Ist das Frequenzspektrum der Drehrate nicht bekannt oder ist es nicht möglich, ein Testsignal zu wählen, das sich in der Frequenz von der zu messenden Drehrate unterscheidet, kann das mechanische Übersprechen wie oben beschrieben simuliert werden.

Figur 2 zeigt eine Schaltung für einen Stimmgabel-Drehratensensor, mit der eine Unwucht des Sensors simuliert wird um den Selbsttest durchzuführen. Die Schwingung der Zinken 2a, 2b wird in ihrer Amplitude durch das piezoresistive Element 6 auf dem oberen Zinken 2a gemessen und über einen Vorverstärker 17 und einen 90° Phasenschieber 13 der Doppelelektrode 3a, 3b zugeführt, um eine resonante Schwingung der Zinken 2a, 2b in Z-Richtung zu erzeugen. Eine Amplitudenregelung 14, die einem Bandpaßfilter 16 nachgeschaltet ist, steuert dabei die Amplitude dieser Anregungsschwingung, bei der die beiden Zinken 2a, 2b parallel zueinander ausgerichtet sind. Das durch das piezoresistive Element 5 am Torsionsbalken 4 erzeugte Ausgangssignal wird nach Durchlaufen eines Vorverstärkers 26 und eines Bandpaßfilters 27 einem Multiplizierer 21 zugeführt, der den Nutzsignalanteil, d. h. den Anteil des Meßsignals, der durch eine Drehung des Systems um die X-Achse erzeugt wird, herausfiltert. Dieser Nutzsignalanteil ist in der Phase um 90° gegenüber der Zinkenschwingung in Z-Richtung verschoben. Somit ergibt sich durch einen Phasenschieber 22 und den Multiplizierer 21 der Nutzsignalanteil aus dem Ausgangssignal des Sensors.

Ein Signalgenerator 30 erzeugt ein periodisches Testsignal der Frequenz f_{Test}, das mit einem Multiplizierer 31 auf das Signal zur Anregung der Zinkenschwingung in Z-Richtung aufmoduliert wird. Durch einen Verstärker 32 werden gegenphasige Signale erzeugt, die durch Addierer 33a, 33b mit den Signalen zur Anregung der Zinkenschwingung in Z-Richtung addiert und der Doppelelektrode 3a, 3b zugeführt werden. Somit ergibt sich eine Schwingung der Zinken 2a, 2b mit konstanter Amplitude in Z-Richtung, der eine Torsionsschwingung der Zinken um die X-Achse überlagert ist. Die so erzeugte Torsionsschwingung hat die gleiche Frequenz wie die Anregungsschwingung in Z-Richtung und eine Amplitude, die sich periodisch mit der Testfrequenz f_{Test} ändert. Die Testfrequenz kann auch Null sein, so daß die Amplitude der zusätzlichen Torsionsschwingung konstant ist.

Die durch die gegenphasige Ansteuerung der Doppelelektrode 3a, 3b erzeugte Torsionsschwingung wird mit einem Signal angeregt, das gleichphasig mit dem Signal zur Anregung der Zinkenschwingung in Z-Richtung ist. Der im Ausgangssignal des piezoresistiven Elements 5 enthaltene Testsignalanteil ist daher um 90° phasenverschoben zum Nutzsignalanteil aufgrund einer gemessenen Drehrate und gleichphasig mit der Anregungsschwingung der Zinken 2a, 2b in Z-Richtung, die mit dem piezoresistiven Element 6 gemessen wird. Aus diesem Grund wird mit einem Multiplizierer 41 derjenige Anteil aus dem Ausgangssignal des Sensors herausgefiltert, der mit der Zinkenschwingung gleichphasig verläuft. Dieser Anteil des Ausgangssignals, der eine simulierte Umwucht des Sensors anzeigt, wird über einen Bandpaßfilter 45 der Selbsttestarbitrierung 43 zugeführt, die die Amplitude des Testsignals mit der Amplitude des Testsignalanteils im Ausgangssignal des Sensors vergleicht. Diese Amplituden stehen in einer festen Beziehung zueinander, die z. B. im Labor festgestellt werden kann und bei einem funktionsfähigen Sensor eine feste Funktion bildet. Falls der Sensor oder ein Teil der Elektronik gestört ist, erfolgt eine Abweichung des Amplitudenverhältnisses vom Sollwert und es wird eine Fehlermeldung generiert.

Die Amplitude des periodischen Testsignals wird durch das Element 37 zusätzlich noch sägezahnartig periodisch verändert. Hierdurch ergibt sich über den gesamten Meßbereich eine besonders genaue Fehlererkennung, da die Selbsttestamplitude über den gesamten Meßbereich angepaßt wird.

Figur 3 zeigt eine Schaltung, durch die zur Durchführung des Selbsttests eine Drehrate simuliert wird. Elemente mit gleicher Funktion sind mit denselben Bezugszeichen wie in Figur 2 bezeichnet. Die Anregung der Zinkenschwingung erfolgt wie bei der in Figur 2 gezeigten Schaltung über den Vorverstärker 17, den Phasenschieber 13, die Amplitudenregelung 14 und die Addierer 33a, 33b. Das Signal zur Anregung der Zinkenschwingung in Z-Richtung läuft um 90° gegenüber der Zinkenschwingung selbst voraus. Die mit dem piezoresistiven Element 5 erfaßte Torsion des Torsionsbalkens 4 erfolgt bei einer Drehung des Systems jedoch um 90° phasenverschoben zur Zinkenamplitude. Daher wird der um 90° zur Zinkenamplitude verschobene Anteil des Ausgangssignals durch den Phasenschieber 22 und den Multiplizierer 21 herausgefiltert und ergibt nach Durchlaufen des Tiefpasses 23 ein Maß für die Drehrate des Systems.

Der Signalgenerator 30 erzeugt das Testsignal mit der Frequenz f_{Test}, das mit Hilfe des Multiplizierers bzw. AM-Modulators 31 auf das Amplitudenmonitorsignal, das durch das piezoresistive Element 6 gemessen wird, aufmoduliert wird. Im Gegensatz zu der oben in Figur 2 gezeigten Schaltung wird also das nicht-phasenverschobene Signal der Zinkenschwingung mit dem Testsignal moduliert. Über die weiteren Multiplizierer 36 werden gegenphasige Signale erzeugt, die durch die Addierer 33a, 33b mit dem Amplitudenregelungssignal zur Anregung der Zinkenschwingung in Z-Richtung addiert und den beiden Elektroden 3a, 3b zugeführt werden. Dadurch wird die Wirkung einer Drehrate simuliert. Das Ausgangssignal des Sensors wird hinsichtlich des aufmodulierten Testsignals mit der Frequenz f_{Test} untersucht. Hierzu durchläuft ein Anteil des Ausgangssignals einen Bandpaßfilter 45 und wird anschließend der Selbsttestarbitrierung 43 zugeführt. Um den Testsignalanteil im Ausgangssignal vom Nutzsignalanteil zu trennen, muß im Fall einer simulierten Drehrate die Testfrequenz f_{Test} außerhalb des Frequenzbereichs der Meßgröße bzw. Drehrate liegen.

Die zweite Schwingungsmode des Sensors, d. h. die künstlich erzeugte Torsionsschwingung der Zinken 2a, 2b ist in ihrer Amplitude entsprechend dem Meßbereich des Sensors moduliert. Über das Element 37 wird die Amplitude des aufgeprägten periodischen Testsignals noch zusätzlich sägezahnartig periodisch verändert, um einen möglichst genauen Selbsttest bei den verschiedenen Meßbereichen zu erhalten. Wie im in Figur 2 gezeigten Fall erfolgt ein Vergleich der Amplitude des Testsignalanteils mit der Sebsttestamplitude um einen Fehler im Sensor oder in der dahintergeschalteten Elektronik festzustellen.

Zusätzlich kann im Sensor 1 ein Unwuchtabgleich 61 vorgesehen sein, der über einen Verstärker 62 und Multiplizierer 63 dafür sorgt, daß durch eventuelle Fehlertoleranzen keine zusätzlichen Schwingungsmoden erzeugt werden.

Der hier gezeigte Stimmgabel-Drehratensensor ist eine besonders bevorzugte Ausführungsform der Erfindung. Allgemein ist die Erfindung auf Systeme anwendbar, bei denen eine Meßgröße über eine schwingende Struktur bzw. Resonanzstruktur erfaßt wird. Dabei gibt es eine Vielzahl von Anwendungen, wie z. B. Beschleunigungssensoren, Drucksensoren oder auch Gimbal-Drehratensensoren.

Figur 4 zeigt als Beispiel schematisch einen Beschleunigungssensor 10, bei dem eine Masse 11 an einem Balken 12 befestigt ist. Zur Messung einer Beschleunigung des Sensors 10 in X-Richtung wird der Balken 12 zu einer Schwingung in Z-Richtung angeregt. Bei einer auftretenden Beschleunigung in X-Richtung verändert sich die Spannung des Balkens 12, so daß sich die Frequenz der Schwingung der Masse in Z-Richtung ändert und ein Maß für die Beschleunigung darstellt. Um einen Selbsttest dieses Sensors durchzuführen, wird im Balken 12 eine zweite Schwingungsmode erzeugt, die sich der ersten Schwingungsmode, die dem Erfassen der Beschleunigung dient, überlagert. Dazu wird der Balken 12 zu Biegeschwingungen in Y-Richtung angeregt. Durch ein piezoresistives Element 15 werden die Schwingungen des Balkens 12 in beiden Schwingungsmoden erfaßt. Der Nutzsignalanteil wird durch Frequenz- und/oder Phasenanalyse vom Testsignalanteil, der die zweite Schwingungsmode verursacht, getrennt. Der Testsignalanteil im Ausgangssignal kann somit überwacht werden, während der Beschleunigungssensor arbeitet bzw. eine Beschleunigung registriert.

In einer weiteren, hier nicht dargestellten Ausführungsform der Erfindung, ist der selbsttestfähige Sensor als Drucksensor realisiert. Bei dem Drucksensor wird eine Membran zu Schwingungen angeregt, um einen auf die Membran wirkenden Druck zu messen. Die Membranspannung ist vom Druck abhängig und beeinflußt die Frequenz der Resonanzschwingung. Somit kann über die schwingende Membran ein Druck gemessen werden. Um den Selbsttest durchzuführen, wird der Membran über eine Aktoreinheit eine weitere Schwingung aufmoduliert, d. h. es überlagern sich zwei Schwingungsmoden der Membran. Das Ausgangssignal der Membranschwingung wird hinsichtlich Frequenz und/oder Phase analysiert, um den Anteil vom Ausgangssignal abzutrennen, der durch die überlagerte zweite Schwingungsmode der Membran erzeugt wird. Auch hier läßt sich durch Vergleich der Amplitude des Testsignals mit der Amplitude des im Ausgangssignal enthaltenen Testsignalanteils ein Selbsttest des Sensors ohne Unterbrechung des Meßsignals durchführen.

Die Aktorelemente zur Erzeugung der Schwingungen sind nicht auf Elektroden beschränkt. Die Anregung kann auf vielfältige Weise, insbesondere z. B. durch elektrostatische, piezoelektrische oder auch thermisch wirkende Elemente erfolgen. Ebenso bilden piezoresistive Elemente nur eine Möglichkeit der Erfassung der verschiedenen Schwingungsmoden der Sensoren. Auch hier kann z. B. eine elektrostatische bzw. kapazitive oder induktive Auslesung erfolgen. Der selbsttestfähige Sensor bzw. die Vorrichtung und das Verfahren zum Selbsttest eines Sensors ermöglichen einen sogenannten ongoing Selbsttest ohne Unterbrechung bzw. Beeinträchtigung des Meßsignals, wobei der Test über den gesamten Meß- und/oder Dynamikbereich des Sensors durch Variation von Amplitude und/oder Frequenz des aufmodulierten Testsignals erfolgen kann.

Allgemein läßt sich die Erfindung auch z. B. anhand eines Drehratensensors wie folgt ausführen:
Während des Betriebes des Drehratensensors wird neben der 1. Mode auch die 2. Mode des Systems direkt angeregt, und zwar mit einem Signal, das an die Auslenkung der 1. Mode gekoppelt und zusätzlich mit einem alternierenden Testsignal amplitudenmoduliert ist.
Das Signal für die Bewegung des Systems in der 2. Mode enthält damit neben dem eigentlichen Meßsignal aufgrund des Corioliseffekts, einen Anteil der durch das Testsignal erzeugt wird. Der Meßanteil und der Testanteil des Signals für die Bewegung des Systems in der 2. Mode können anschließend durch Frequenz- und/oder Phasenanalyse voneinander getrennt werden. Anschließend wird geprüft, ob der Zusammenhang zwischen dem Testsignalanteil in der 2. Mode und dem Testsignal selbst, vorgegebene Bedingungen erfüllt. Falls das nicht zutrifft, gibt der Sensor eine Fehlermeldung ab.

Dabei ist die Anregung der 2. Mode in Phase mit der Bewegung der 1. Mode, aufgenommen z.B. durch Sensoren an Federn. Der Coriolisanteil der 2. Mode hingegen ist um 90° phasenverschoben im Vergleich zur Bewegung der 1. Mode.

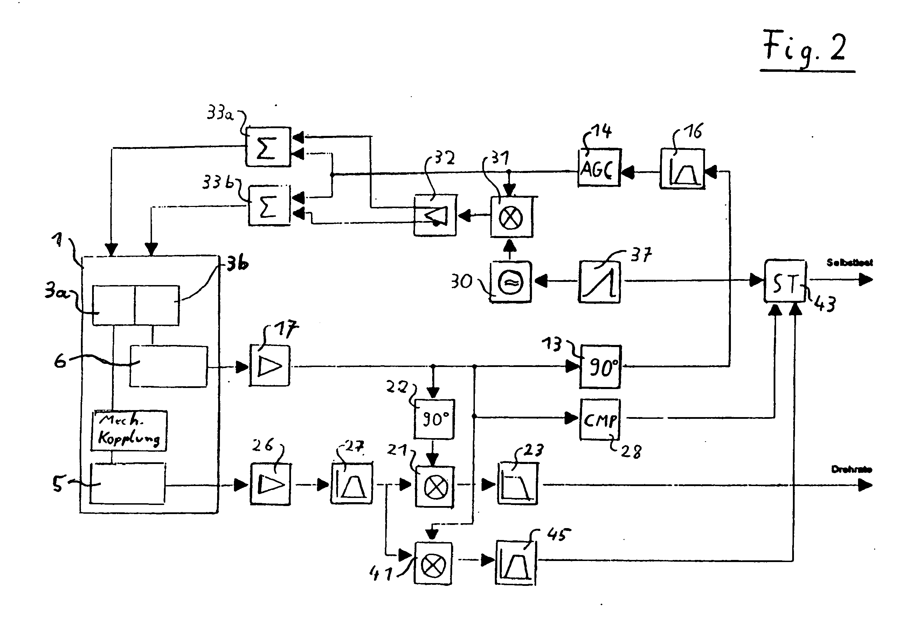

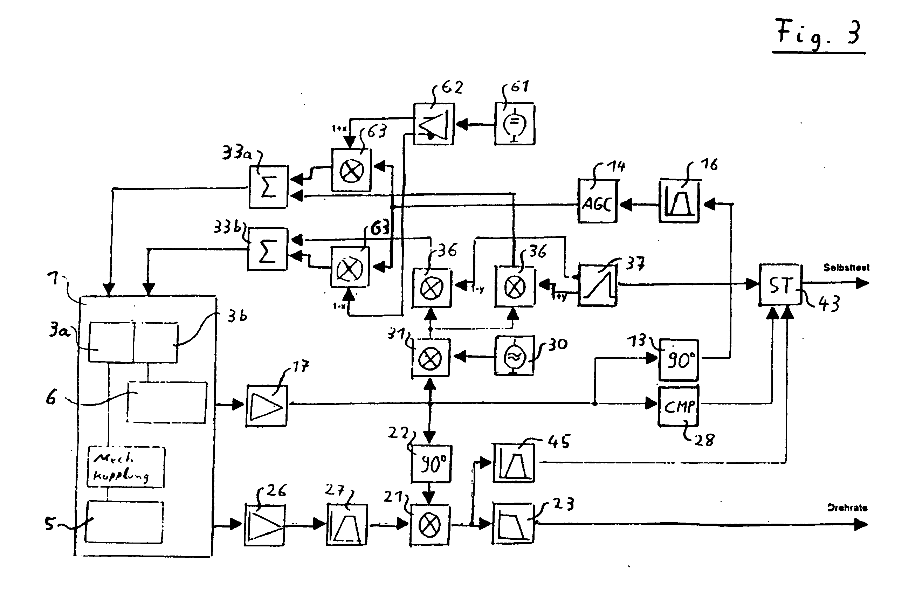

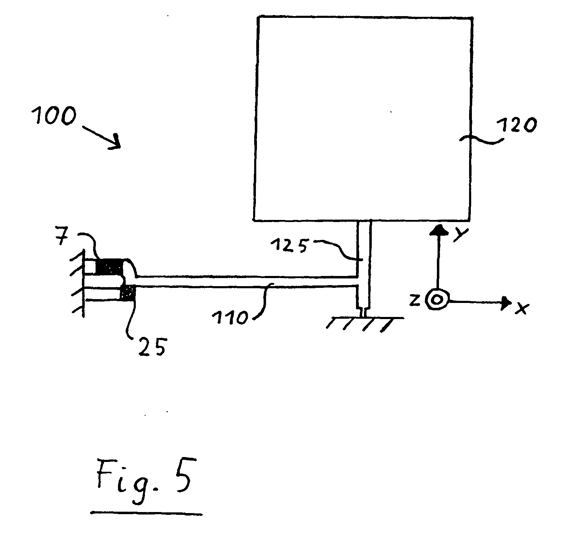

Figur 5 zeigt in prinzipieller Darstellung einen Schnitt durch einen erfindungsgemäßen Beschleunigungssensor. Der Beschleunigungssensor besteht aus einer Anregungsstruktur 7, die als Aktoreinheit dient, und einer schwingfähigen Struktur 100, die einen Resonator bzw. Resonatorsteg 110 und eine daran angekoppelte seismische Masse 120 umfaßt. Der schwingfähige Resonator 110 und die schwingfähige Masse 120 sind über einen weiteren Steg 125 miteinander gekoppelt, d.h. sie sind nicht in einem einzigen Element vereint. Ein Detektorelement 25 dient zur piezoresistiven Detektion der Grundmode des Resonatorsteges 110, der durch die Anregungsstruktur 7 thermisch zu Schwingungen angeregt wird. In der bevorzugten Ausführungsform beträgt die Grundmode des Resonatorsteges 110 400-500 kHz. Bei einer Beschleunigung in x-Richtung wird die Masse aufgrund ihrer Trägheit ausgelenkt und der Resonator 110 erfährt eine Zug- oder Druckbeanspruchung. Dies führt zu einer Änderung der Resonanzfrequenz und kann als Meßsignal detektiert werden. Die beschriebene Anregungsstruktur 7 ist so ausgelegt, daß sie auch die Eigenmoden der seismischen Masse 120 anregen kann. Die Grundmode des Systems ist die laterale Schwingung der Masse 120, die in der bevorzugten Ausführungsform eine Frequenz von ca. 16 kHz aufweist. Die Schwingung dieser Mode entspricht einer periodischen, sinusförmigen Beschleunigung in x-Richtung. Durch permanente Superposition der Anregungssignale des Resonatorstegs und der lateralen Schwingungsmode der Masse 120 wird ein permanenter Selbsttest realisiert. Die vom Detektor 25 erzeugten Signale werden mittels einer geeigneten Auswerteeleketronik einer Analyse bzw. Fourieranalyse unterzogen, um das Testsignal, das durch die schwingende Masse 120 erzeugt wird und in der bevorzugten Ausführungsform eine Frequenz von 16 kHz aufweist, vom Meßsignal zu trennen.

Die Anregungsstruktur bzw. Aktoreinheit 7 kann z.B. eine thermische, kapazitive oder piezoelektrische Aktorik aufweisen. Um Platz und Kosten zu sparen wird nur eine Aktorik zur Anregung des Resonatorstegs 110 und der Masse 120 verwendet. Es ist aber auch möglich, die Anregung des Resonatorstegs 110 und der Masse 120 mit zwei getrennten Aktorelementen vorzunehmen, wobei jede Kombination der beiden Aktorikelemente aus thermischer, kapazitiver und piezoelektrischer Aktorik möglich ist.

Die Detektionseinheit 25 dient zur Überwachung beider Schwingungen bzw. Schwingungsmoden und kann kapazitiv, piezoelektrisch oder auch piezoresistiv ausgeführt sein. Es können aber auch zwei getrennte Detektionseinheiten zur Überwachung der beiden Schwingungen bzw. Schwingungsmoden ausgeführt sein, wobei wiederum jede Kombination aus kapazitiver,piezoelektrischer und piezoresistiver Detektion möglich sind.

Anstatt zur Anregung und zur Sinaldetektion zwei unterschiedliche Elemente vorzusehen, können diese Elemente auch in einem einzigen Element zur Anregung und Detektion beider Signale verwirklicht sein.

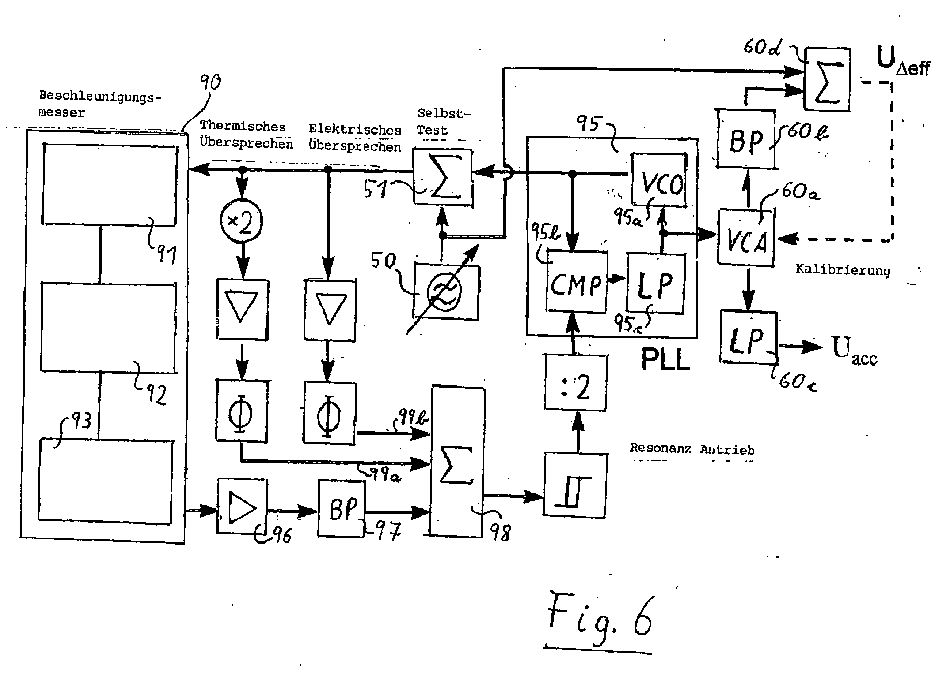

Figur 6 zeigt den prinzipiellen Aufbau der Steuer- und Auswerteschaltung als Blockschaltbild. Der Beschleunigungsmesser 90 umfaßt eine thermische Anregungsstufe 91, um den Resonator 110 zu Schwingungen anzuregen, eine Kopplungsstufe 92 zur Ankopplung der zu messenden physikalischen Größe bzw. der Beschleunigung an das schwingende System und eine Detektionsstufe bzw. einen Piezosensor 93 zur Erfassung der Schwingungen des Resonators 110. Ein PLL-Kreis 95 stellt das Herzstück der Auswerteschaltung dar. Er umfaßt einen spannungsgesteuerten Oszillator 95a, einen Phasenkomparator 95b und einen Tiefpaß 95c. Der spannungsgesteuerte Oszillator erzeugt im Betrieb das Anregungssignal, das der Anregungsstufe 91 zugeführt wird. Der Phasenkomparator 95b vergleicht die Phase des Anregungssignals mit derjenigen des Detektionssignals, das vom Piezosensor 93 geliefert wird. Als Ergebnis liefert der Phasenkomparator 95b eine Spannung, um die Anregungsfrequenz des spannungsgesteuerten Oszillators 95a so nachzuführen, daß der Resonatorsteg stets in Resonanz betrieben wird. Diese Regelspannung wird in der hier gezeigten bevorzugten Ausführungsform auch als Meßsignal verwendet.

Ein Addierer 51 dient dazu, dem Anregungssignal, das vom spannungsgesteuerten Oszillator 95a zugeführt wird, eine zusätzliche Anregungsspannung zu überlagern, um damit eine laterale Schwingung der seismischen Masse 120 anzuregen. Diese laterale Schwingung erfolgt in x-Richtung, d.h. in Längsrichtung des Resonatorstegs 110 (siehe Figur 2). Die zusätzliche Anregungsspannung wird durch einen Oszillator 50 erzeugt, wobei Frequenz und Amplitude der zusätzlichen Anregungsspannung einstellbar sind. Am Ausgang des Addierers 51 erhält man damit zusätzlich zum Signal zur Anregung der Grundmode des Resonators 110 ein Selbsttestsignal, das beispielsweise eine Frequenz von ca. 16 kHz aufweist.

Das modulierte Anregungssignal wird dem Beschleunigungsmesser 90 zugeführt und regt den Resonator 110 zu Schwingungen in seiner Eigenfrequenz an, ebenso wie die seismische Masse 120, die zu Schwingungen mit einer weiteren Frequenz ausführt. Im vorliegenden Fall hat die Grundmode des Resonatorstegs 110 eine Frequenz von ca. 400-500 kHz, während die seismische Masse mit einer Frequenz von ca. 16 kHz schwingt. Die Schwingung der Masse 120 entspricht einer intern eingeprägten, periodischen Beschleunigung.

Das vom Piezosensor 93 des Beschleunigungsmessers 90 kommende Ausgangssignal gelangt über einen Verstärker 96 und einen Bandpaß 97 zu einem Addierer 98. Dem Addierer 98 werden weitere Signale 99a, 99b zugeführt, die zur Elemination des thermischen Übersprechens (Signal 99a) bwz. des elektrischen Übersprechens (Signal 99b) dienen. Nach dem Addierer 98 durchläuft das Meßsignal einen Sinus-Rechteckkonverter und gelangt in den PLL-Kreis 95, der oben beschrieben ist.

Das Ausgangssignal des PLL-Kreises 95 wird durch einen steuerbaren Verstärker 60a verstärkt. Anschließend wird das Signal einer Frequenzanalyse unterworfen. Durch einen Tiefpaß 60c wird das von einer externer Beschleunigung herrührende Signal herausgefiltert. Am Ausgang des Tiefpasses 60c steht somit das Beschleunigungssignal U_{acc} zur Verfügung.

Das Selbsttestsignal, das im vorliegenden Fall eine Frequenz von ca. 16 kHz aufweist, wird mit Hilfe eines Bandpasses 60b abgetrennt. Anschließend wird im Schaltelement 60d die Differenz zwischen dem Selbsttestsignal und dem Test-Anregungssignal gebildet, wobei sich eine Spannung U_{Δeff} ergibt. Falls die Spannung U_{Δeff} eine bestimmte Schwelle überschreitet, liegt ein Fehler vor. Damit ist der gesamte Sensor einschließlich des Elektronikkreises getestet. Der Test bezieht sich also nicht nur auf den Sensor selbst, sondern auch auf die Hauptteile der Auswertelektronik.

Da die Spannung U_{Δeff} ein Maß für die Empfindlichkeit ist, kann damit eine Selbstkalibrierung des Sensors erfolgen. Hierzu wird diese Spannung mit Hilfe des steuerbaren Verstärkers 60a auf einen konstanten, vorgegebenen Wert geregelt. Diese Schaltung ist in Figur 6 durch die unterbrochene Linie dargestellt.

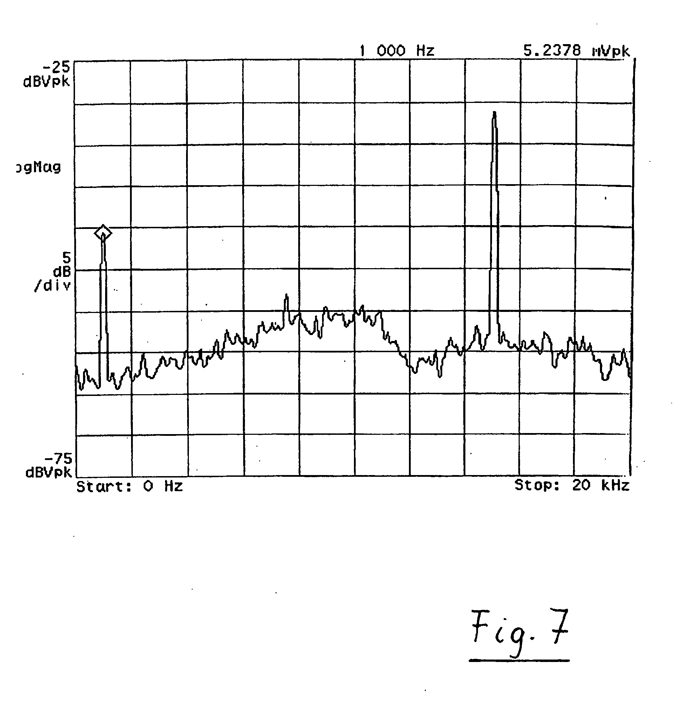

Abbildung 7 zeigt eine Fourieranalyse des Ausgangssignals der oben beschriebenen Auswertelektronik. In diesem Fall wurde die Grundmode des Resonatorstegs mit einer Frequenz im Bereich von 400-500 kHz thermisch angeregt, wobei zusätzlich auch die Eigenmoden der seismischen Masse 120 angeregt wurden. Die Grundmode des Systems ist die laterale Schwingung der Masse 120 bei einer Frequenz von 16 kHz. Die Schwingung dieser Mode entspricht einer periodischen, sinusförmigen Beschleunigung in x-Richtung (siehe Figur 5). Durch permanente Superposition der Anregungssignale des Resonatorstegs 110 und der lateralen Schwingungsmode der Masse 120 wurde in diesem Fall ein permanenter Selbsttest durchgeführt. Mit Hilfe eines Schwingerregers wurde eine sinusförmige Beschleunigung von 1 kHz in x-Richtung erzeugt, während zusätzlich der Sensor im Selbsttestmodus betrieben wurde. Die in Figur 7 dargestellt Fourieranalyse des Ausgangssignals zeigt das Signal der äußeren Beschleunigung bei 1 kHz und das Signal der induzierten Beschleunigung bzw. des Selbsttests bei ca. 16 kHz.

Der hier dargestellte selbsttestfähige Beschleunigungssensor kann durch entsprechende Modifikation auch zur Messung anderer Größen dienen, die auf die Masse 120 eine Kraft ausüben. Der Beschleunigungssensor hat ein resonantes Ausleseprinzip und es kann während der Messung ein permanenter Selbsttest durchgeführt werden. Mit Hilfe eines zeitkontinuierlichen Testsignals wird eine Testbeschleunigung eingeprägt und das zugehörige Beschleunigungssignal steht somit permanent am Ausgang zur Verfügung.

Insgesamt werden durch die Erfindung Sensoren geschaffen, die sich ohne Unterbrechung der eigentlichen Messung selbst testen, wobei keine aufwendigen weiteren zusätzlichen Komponenten erforderlich sind, so daß der selbsttestfähige Sensor in kleiner und kostengünstiger Bauweise gefertigt werden kann.

## Patentansprüche

1. Sensor, mit einer schwingfähigen Struktur (2a, 2b; 11; 100) zur Erfassung einer Messgröße durch eine erste periodische Schwingung der Struktur (2a, 2b; 11; 100); einem Element (5; 15; 25) zur Erzeugung eines von der Messgröße abhängigen Ausgangssignals, und Mitteln (41, 45; 60a, 60b) zur Erfassung und/oder Abtrennung eines Testsignalanteils vom Ausgangssignal, der durch eine der ersten Schwingung überlagerte zweite periodische Schwingung der Struktur (2a, 2b; 11; 100) erzeugt wird, **gekennzeichnet durch** eine Aktoreinheit (3a, 3b; 7) zur Anregung der Struktur (2a, 2b; 11; 100) zu der ersten periodischen Schwingung und Mittel (3a, 3b, 33a, 33b; 7, 50, 51) zur Anregung der Struktur (2a, 2b; 11; 100) in einer zweiten Schwingungsmode, die sich der ersten Schwingungsmode, die der Erfassung der Messgröße dient, überlagert.

2. Sensor nach Anspruch 1, **gekennzeichnet durch** eine Einrichtung (30, 31; 50, 51) zum Aufmodulieren eines Testsignals auf ein Signal zur Anregung der Struktur (2a, 2b; 11; 100).

3. Sensor nach Anspruch 1 oder 2, **dadurch gekennzeichnet, dass** eine mechanische Unwucht der Struktur als Mittel zur Anregung der zweiten Schwingungsmode verwendet wird.

4. Sensor nach einem der vorhergehenden Ansprüche, **dadurch gekennzeichnet, dass** die Mittel zur Abtrennung des Testsignalanteils (41, 45; 60a, 60b) eine Einrichtung zur Frequenz- und/oder Phasenanalyse des Ausgangssignals umfassen.

5. Sensor nach einem der vorhergehenden Ansprüche weiterhin **gekennzeichnet durch** Mittel (30, 37) zum periodischen Verändern der Amplitude und/oder Frequenz des Testsignals.

6. Sensor nach einem der vorhergehenden Ansprüche, **dadurch gekennzeichnet, dass** er ein Drehratensensor, ein Beschleunigungssensor, oder ein Drucksensor ist.

7. Sensor nach einem der vorhergehenden Ansprüche, **dadurch gekennzeichnet, dass** die schwingfähige Struktur (100) einen Resonator (110) und eine daran gekoppelte schwingfähige Masse (120) aufweist, die bei einer Auslenkung die Resonanzfrequenz des Resonators (110) ändert, wobei zur Erzeugung des Testsignalanteils während der Messung die Masse (120) in Schwingung versetzbar ist.

8. Sensor nach einem der vorhergehenden Ansprüche, **gekennzeichnet durch** Mittel zur Kalibrierung des Sensors mittels des Testsignalanteils.

9. Sensor nach einem der vorhergehenden Ansprüche, **dadurch gekennzeichnet, dass** die Aktoreinheit (7) so angeordnet ist, dass sie einen Resonator (110) und eine daran gekoppelte Masse (120) in Schwingungen unterschiedlicher Mode versetzt, wobei die schwingende Masse (120) derart angeordnet ist, dass sie die Resonanzfrequenz des Resonators (110) periodisch ändert, um den Testsignalanteil zu erzeugen.

10. Sensor mit einer Vorrichtung zum Selbsttest des Sensors, wobei der Sensor eine Messgröße über eine schwingfähige Struktur (2a, 2b; 11; 100) erfasst und in Abhängigkeit von der Messgröße ein periodisches Ausgangssignal erzeugt, mit Mitteln zur Abtrennung (41; 45; 60a, 60b) eines Testsignalanteils, der einem Nutzsignalanteil überlagert ist, aus dem periodischen Ausgangssignal des Sensors, und mit Vergleichsmitteln (43; 60d) zum Vergleichen des Testsignalanteils mit einem vordefinierten Wert oder mit einem dem Sensor zugeführten Testsignal, **gekennzeichnet durch** eine Aktoreinheit (3a, 3b; 7) zur Anregung der Struktur (2a, 2b; 11; 100) zu der ersten periodischen Schwingung und Mittel (3a, 3b, 33a, 33b; 7, 50, 51) zur Anregung der Struktur (2a, 2b; 11; 100) in einer zweiten Schwingungsmode, die sich der ersten Schwingungsmode, die der Erfassung der Messgröße dient, überlagert.

11. Sensor nach Anspruch 10, weiterhin **gekennzeichnet durch** eine Einrichtung (30, 31; 50, 51) zum Aufmodulieren eines Testsignals auf ein Signal zur Anregung der Struktur (2a, 2b; 11, 100).

12. Sensor nach Anspruch 10 oder 11, **dadurch gekennzeichnet, dass** die Struktur so angeordnet ist, dass sie eine mechanische Unwucht zur Erzeugung der zweiten Schwingungsmode aufweist.

13. Sensor nach einem der Ansprüche 10 bis 12, **dadurch gekennzeichnet, dass** die Mittel zur Abtrennung (41, 45; 60a, 60b) eine Einrichtung zur Frequenz- und/oder Phasenanalyse des Ausgangssignals aufweisen.

14. Sensor nach einem der Ansprüche 10 bis 13, weiterhin **gekennzeichnet durch** Mittel (30, 37; 50) zum periodischen Verändern der Amplitude und/oder Frequenz des Testsignals.

15. Verfahren zum Selbsttest eines Sensors mit einer schwingfähigen Struktur (2a, 2b; 11; 100) mit den Schritten:
Überlagern einer ersten Schwingung der Struktur (2a, 2b; 11; 100) mit einer zweiten periodischen Schwingung;
Erfassen eines Ausgangssignals, das Informationen über eine Messgröße enthält, die an die schwingende Struktur (2a, 2b; 11; 100) koppelt; und
Überwachen eines im Ausgangssignal enthaltenen Testsignalanteils, der durch die zweite periodische Schwingung der Struktur (2a, 2b; 11; 100) erzeugt wird,
**dadurch gekennzeichnet,**
**dass** die schwingfähige Struktur (2a, 2b; 11; 100) durch Aktoreinheiten (3a, 3b; 33a, 33b; 7, 50, 51) zu überlagerten Schwingungen in einer ersten und einer zweiten Schwingungsmode angeregt wird, um die Messgröße und den Testsignalanteil gleichzeitig zu erfassen.

16. Verfahren nach Anspruch 15, **dadurch gekennzeichnet, dass** ein Anregungssignal für die Struktur (2a, 2b; 11; 100) durch ein Testsignal moduliert wird.

17. Verfahren nach Anspruch 15 oder 16, **dadurch gekennzeichnet, dass** die Anregung der zweiten periodischen Schwingung der Struktur (2a, 2b; 11; 100) durch eine mechanische Kopplung oder ein mechanisches Übersprechen des Sensors erfolgt.

18. Verfahren nach einem der Ansprüche 15 bis 17, **dadurch gekennzeichnet, dass** das Ausgangssignal einer Frequenz- und/oder Phasenanalyse unterzogen wird.

19. Verfahren nach einem der Ansprüche 15 bis 18, **dadurch gekennzeichnet, dass** das Testsignal während des Messbetriebes des Sensors in seiner Frequenz und/oder Amplitude variiert wird.

20. Verfahren nach einem der Ansprüche 15 bis 19, **dadurch gekennzeichnet, dass** der Testsignalanteil im Ausgangssignal zur Kalibrierung des Sensors verwendet wird.

21. Verfahren nach einem der Ansprüche 15 bis 20, **dadurch gekennzeichnet, dass** die Struktur zu Schwingungen mit mindestens zwei Frequenzen angeregt wird, wobei die erste Frequenz die zu messende Größe repräsentiert, während die zweite Frequenz ein Testsignal repräsentiert.

22. Sensor nach einem der Ansprüche 1 bis 9 zur Messung von Beschleunigungen, **dadurch gekennzeichnet,**
**dass** die schwingfähige Struktur (100) zur Erfassung einer Messgröße einen Resonator (110) und eine schwingfähige Masse (120) aufweist, wobei der Resonator so an die Masse gekoppelt ist, dass sich seine Resonanzfrequenz bei einer Auslenkung der Masse ändert,
**dass** der Resonator so angeordnet ist, dass das Ausgangssignal von der Resonanzfrequenz des Resonators abhängt;
**dass** die Aktoreinheit (7) zur Anregung des Resonators zu der ersten periodischen Schwingung und die Mittel (7, 50, 51) zur Anregung des Resonators in einer zweiten Schwingungsmode so angeordnet sind, dass der Resonator und die Masse gleichzeitig zu Schwingungen unterschiedlicher Mode angeregt werden; und
**dass** die Mittel (60a, 60b) zur Erfassung und/oder Abtrennung eines Testsignalanteils vom Ausgangssignal so angeordnet sind, dass sie die Schwingungsmode der Masse als Testsignal aus dem Ausgangssignal separieren.

23. Beschleunigungssensor nach Anspruch 22, **gekennzeichnet durch** eine Vorrichtung zum Selbsttest nach einem der Ansprüche 10 bis 14.

## Claims

1. A sensor, with an oscillatory structure (2a, 2b; 11; 100) for detecting a measured variable by means of a first periodic oscillation of the structure (2a, 2b; 11; 100); an element (5; 15; 25) for generating an output signal dependent on the measured variable, and means (41, 45; 60a, 60b) for detecting and/or separating a test signal portion from the output signal, which portion is produced by a second periodic oscillation of the structure (2a, 2b; 11; 100) superimposed on the first oscillation, **characterized by** an actuator unit (3a, 3b; 7) for exciting the structure (2a, 2b; 11; 100) to the first periodic oscillation and means (3a, 3b, 33a, 33b; 7, 50, 51) for exciting the structure (2a, 2b; 11; 100) in a second oscillation mode that is superimposed on the first oscillation mode, which is used to detect the measured variable.

2. A sensor according to claim 1, **characterized by** an arrangement (30, 31; 50, 51) for modulating a test signal onto a signal for exciting the structure (2a, 2b; 11; 100).

3. A sensor according to claim 1 or claim 2, **characterized in that** a mechanical unbalance of the structure is used as means for exciting the second oscillation mode.

4. A sensor according to any one of the preceding claims, **characterized in that** the means for separating the test signal portion (41, 45; 60a, 60b) comprise an arrangement for frequency and/or phase analysis of the output signal.

5. A sensor according to any one of the preceding claims, further **characterized by** means (30, 37) for periodically varying the amplitude and/or frequency of the test signal.

6. A sensor according to any one of the preceding claims, **characterized in that** it is a rate of-rotation-sensor, an acceleration sensor or a pressure sensor.

7. A sensor according to any one of the preceding claims, **characterized in that** the oscillatory structure (100) has a resonator (110) and an oscillatory mass (120) coupled thereto, which in the event of a deflection varies the resonant frequency of the resonator (110), the mass (120) being capable of being set into oscillation to produce the test signal portion during the measurement.

8. A sensor according to any one of the preceding claims, **characterized by** means for calibrating the sensor by means of the test signal portion.

9. A sensor according to any one of the preceding claims, **characterized in that** the actuator unit (7) is arranged so that it sets a resonator (110) and a mass (120) coupled thereto into oscillations of different modes, the oscillating mass (120) being arranged so that it varies the resonant frequency of the resonator (110) periodically in order to generate the test signal portion.

10. A sensor with a device for self-testing of the sensor, the sensor detecting a measured variable via an oscillatory structure (2a, 2b; 11; 100) and depending on the measured variable generating a periodic output signal, with means (41, 45; 60a, 60b) for separating a test signal portion, which is superimposed on a useful signal portion, from the periodic output signal of the sensor, and with comparing means (43; 60d) for comparing the test signal portion with a predefined value or with a test signal supplied to the sensor, **characterized by** an actuator unit (3a, 3b; 7) for exciting the structure (2a, 2b; 11; 100) to the first periodic oscillation and means (3a, 3b; 33a, 33b; 7, 50, 51) for exciting the structure (2a, 2b; 11; 100) in a second oscillation mode, which is superimposed on the first oscillation mode, which is used to detect the measured variable.

11. A sensor according to claim 10, further **characterized by** an arrangement (30, 31; 50, 51) for modulating a test signal onto a signal for exciting the structure (2a, 2b; 11; 100).

12. A sensor according to claim 10 or 11, **characterized in that** the structure is arranged so that it has a mechanical unbalance for generating the second oscillation mode.

13. A sensor according to any one of claims 10 to 12, **characterized in that** the means (41, 45; 60a, 60b) for separation comprise an arrangement for frequency and/or phase analysis of the output signal.

14. A sensor according to any one of claims 10 to 13, further **characterized by** means (30, 37; 50) for periodically varying the amplitude and/or frequency of the test signal.

15. A method for self-testing of a sensor with an oscillatory structure (2a, 2b; 11; 100) with the steps:
superimposition of a second periodic oscillation on a first oscillation of the structure (2a, 2b; 11; 100);
detection of an output signal, which contains information about a measured variable that couples to the oscillating structure (2a, 2b; 11; 100); and
monitoring of a test signal portion contained in the output signal, which test signal portion is generated by a second periodic oscillation of the structure (2a, 2b; 11; 100),
**characterized in that**
the oscillatory structure (2a, 2b; 11; 100) is excited by actuator units (3a, 3b; 33a, 33b; 7, 50, 51) to superimposed oscillations in a first and a second oscillation mode, in order to detect the measured variable and the test signal portion at the same time.

16. A method according to claim 15, **characterized in that** an excitation signal for the structure (2a, 2b; 11; 100) is modulated by a test signal.

17. A method according to claim 15 or 16, **characterized in that** the excitation of the second periodic oscillation of the structure (2a, 2b; 11; 100) is effected by a mechanical coupling or a mechanical crosstalk of the sensor.

18. A method according to any one of claims 15 to 17, **characterized in that** the output signal is subjected to a frequency and/or phase analysis.

19. A method according to any one of claims 15 to 18, **characterized in that** the test signal is varied during the measuring operation of the sensor in its frequency and/or amplitude.

20. A method according to any one of claims 15 to 19, **characterized in that** the test signal portion in the output signal is used to calibrate the sensor.

21. A method according to any one of claims 15 to 20, **characterized in that** the structure is excited to oscillations having at least two frequencies, the first frequency representing the variable to be measured, while the second frequency represents a test signal.

22. A sensor according to any one of claims 1 to 9 for measuring accelerations, **characterized in that**
the oscillatory structure (100) for detecting a measured variable has a resonator (110) and an oscillatory mass (120), the resonator being coupled to the mass so that its resonant frequency changes in the event of a deflection of the mass;
the resonator is arranged so that the output signal depends on the resonant frequency of the resonator;
the actuator unit (7) for exciting the resonator to the first periodic oscillation and the means (7, 50, 51) for exciting the resonator in a second oscillation mode are arranged so that the resonator and the mass are excited simultaneously to oscillations of different mode; and
the means (60a, 60b) for detecting and/or separating a test signal portion from the output signal are arranged so that they separate the oscillation mode of the mass as the test signal from the output signal.

23. An acceleration sensor according to claim 22, **characterized by** a device for self-testing according to any one of claims 10 to 14.

## Revendications

1. Capteur, comprenant une structure vibratoire (2a, 2b ; 11, 100) pour détecter une grandeur de mesure par une première vibration périodique de la structure (2a, 2b ; 11 ; 100), un élément (5 ; 15 ; 25) pour produire un signal de sortie dépendant de la grandeur de mesure, et des moyens (41, 45 ; 60a, 60b) pour détecter et/ou séparer une part de signal de contrôle du signal de sortie, produite par une seconde vibration périodique de la structure (2a, 2b ; 11 ; 100) superposée à la première vibration, **caractérisé par** une unité d'acteur (3a, 3b ; 7) pour exciter la structure (2a, 2b ; 11 ; 100) en la première vibration périodique et par des moyens (3a, 3b, 33a, 33b ; 7, 50, 51) pour exciter la structure (2a, 2b ; 11 ; 100) en un second mode de vibrations, qui se superpose au premier mode de vibrations servant à détecter la grandeur de mesure.

2. Capteur suivant la revendication 1, **caractérisé par** un dispositif (30, 31 ; 50, 51) pour moduler un signal de contrôle sur un signal d'excitation de la structure (2a, 2b ; 11 ; 100).

3. Capteur suivant l'une des revendications 1 et 2,
**caractérisé par** un balourd mécanique de la structure en tant que moyen d'excitation du second mode de vibrations.

4. Capteur suivant l'une des revendications précédentes, **caractérisé en ce que** les moyens de séparation de la part de signal de contrôle (41, 45 ; 60a, 60b) comportent un dispositif pour l'analyse de fréquence et/ou de phase du signal de sortie.

5. Capteur suivant l'une des revendications précédentes, **caractérisé par** des moyens (30, 37) de modification périodique de l'amplitude et/ou de la fréquence du signal de contrôle.

6. Capteur suivant l'une des revendications précédentes, **caractérisé en ce qu'**il est un capteur de vitesse de rotation, un capteur d'accélération ou un capteur de pression.

7. Capteur suivant l'une des revendications précédentes, **caractérisé en ce que** la structure vibratoire (100) comporte un résonateur (110) et une masse vibratoire (120) couplée à ce dernier, qui modifie lors d'une déviation la fréquence de résonance du résonateur (110), la masse (120) pouvant être mise en vibrations pendant la mesure pour produire la part de signal de contrôle.

8. Capteur suivant l'une des revendications précédentes, **caractérisé par** des moyens d'étalonnage du capteur au moyen de la part de signal de contrôle.

9. Capteur suivant l'une des revendications précédentes, **caractérisé en ce que** l'unité d'acteur (7) est disposée de sorte qu'elle met en vibrations de mode différent un résonateur (110) et une masse (120) couplée à ce dernier, la masse vibrante (120) étant alors disposée de telle sorte qu'elle modifie périodiquement la fréquence de résonance du résonateur (110), pour produire la part de signal de contrôle.

10. Capteur avec un dispositif d'autocontrôle du capteur, le capteur détectant une grandeur de mesure par l'intermédiaire d'une structure vibratoire (2a, 2b ; 11 ; 100) et produisant un signal de sortie périodique en fonction de la grandeur de mesure, comprenant des moyens de séparation (41 ; 45 ; 60a, 60b) d'une part de signal de contrôle, superposée à une part de signal utile, du signal de sortie périodique du capteur, et des moyens de comparaison (43 ; 60d) pour comparer la part de signal de contrôle à une valeur prédéfinie ou à un signal de contrôle transmis au capteur, **caractérisé par** une unité d'acteur (3a, 3b ; 7) pour exciter la structure (2a, 2b ; 11 ; 100) en la première vibration périodique et par des moyens (3a, 3b, 33a, 33b ; 7, 50, 51) pour exciter la structure (2a, 2b ; 11 ; 100) en un second mode de vibrations, qui se superpose au premier mode de vibrations servant à détecter la grandeur de mesure.

11. Capteur suivant la revendication 10, en outre **caractérisé par** un dispositif (30, 31 ; 50, 51) pour moduler un signal de contrôle sur un signal d'excitation de la structure (2a, 2b ; 11 ; 100).

12. Capteur suivant l'une des revendications 10 et 11, **caractérisé en ce que** la structure est disposée de sorte qu'elle présente un balourd mécanique pour produire le second mode de vibrations.

13. Capteur suivant l'une des revendications 10 à 12, **caractérisé en ce que** les moyens de séparation (41, 45 ; 60a, 60b) présentent un dispositif pour l'analyse de fréquence et/ou de phase du signal de sortie.

14. Capteur suivant l'une des revendications 10 à 13, en outre **caractérisé par** des moyens (30, 37 ; 50) de modification périodique de l'amplitude et/ou de la fréquence du signal de contrôle.

15. Procédé d'autocontrôle d'un capteur avec une structure vibratoire (2a, 2b ; 11 ; 100) comprenant les phases :
superposition d'une première vibration de la structure (2a, 2b ; 11 ; 100) avec une seconde vibration périodique ;
détection d'un signal de sortie qui contient des informations sur une grandeur de mesure, couplée à la structure vibrante (2a, 2b ; 11 ; 100) et
surveillance d'une part de signal de contrôle contenue dans le signal de sortie, qui est produite par la seconde vibration périodique de la structure (2a, 2b ; 11 ; 100),
**caractérisé en ce que**
la structure vibratoire (2a, 2b ; 11 ; 100) est excitée par des unités d'acteurs (3a, 3b ; 33a ; 33b ; 7, 50, 51) en vibrations superposées dans un premier mode et dans un second mode de vibrations, pour détecter simultanément la grandeur de mesure et la part de signal de contrôle.

16. Procédé suivant la revendication 15, **caractérisé en ce qu'**un signal d'excitation pour la structure (2a, 2b ; 11 ; 100) est modulé par un signal de contrôle.

17. Procédé suivant l'une des revendications 15 et 16, **caractérisé en ce que** l'excitation de la seconde vibration périodique de la structure (2a, 2b ; 11 ; 100) s'effectue par un couplage mécanique ou une diaphonie mécanique du capteur.

18. Procédé suivant l'une des revendications 15 à 17, **caractérisé en ce que** le signal de sortie est soumis à une analyse de fréquence et/ou de phase.

19. Procédé suivant l'une des revendications 15 à 18, **caractérisé en ce que** le signal de contrôle est modifié dans sa fréquence et/ou son amplitude pendant le fonctionnement de mesure du capteur.

20. Procédé suivant l'une des revendications 15 à 19, **caractérisé en ce que** la part de signal de contrôle dans le signal de sortie est utilisée pour l'étalonnage du capteur.

21. Procédé suivant l'une des revendications 15 à 20, **caractérisé en ce que** la structure est excitée en vibrations avec au moins deux fréquences, la première fréquence représentant la grandeur à mesurer et la seconde fréquence représentant un signal de contrôle.

22. Capteur suivant l'une des revendications 1 à 9 pour la mesure d'accélérations, **caractérisé en ce que**
la structure vibratoire (100) pour la détection d'une grandeur de mesure présente un résonateur (110) et une masse vibratoire (120), le résonateur étant couplé à la masse de sorte que sa fréquence de résonance se modifie lors d'une déviation de la masse ;
le résonateur est disposé de sorte que le signal de sortie dépend de la fréquence de résonance du résonateur ;
l'unité d'acteur (7) pour l'excitation du résonateur en la première vibration périodique et les moyens (7, 50, 51) pour l'excitation du résonateur en un second mode de vibrations sont disposés de sorte que le résonateur et la masse sont excités simultanément en vibrations de mode différent ; et
les moyens (60a, 60b) pour détecter et/ou séparer une part de signal de contrôle du signal de sortie sont disposés de sorte qu'ils séparent le mode de vibrations de la masse, en tant que signal de contrôle, du signal de sortie.

23. Capteur d'accélération suivant la revendication 22, **caractérisé par** un dispositif d'autocontrôle suivant l'une des revendications 10 à 14.
